# EUROPÄISCHE PATENTSCHRIFT

(11) **EP 1 315 339 B1**
(45) Veröffentlichungstag und Bekanntmachung des Hinweises auf die Patenterteilung: **12.04.2006**
(21) Anmeldenummer: 02025662.4
(22) Anmeldetag: 20.11.2002
(51) Int. Cl.: H04L 12/56

(54) **Verfahren und Steuergerät zur Zuteilung von variablen Zeitschlitzen für eine Datenübertragung in einem paketorientierten Datennetzwerk**
Method and control unit for assigning variable time slots for a data transmission in a packet network
Procédé et unité de commande pour l' allocation des intervalles temporelles variables pour la transmission des données dans un réseau par paquets

(30) Priorität: 21.11.2001 DE 10157103
(43) Veröffentlichungstag der Anmeldung: 28.05.2003
(73) Patentinhaber: Alcatel, 75008 Paris (FR)
(72) Erfinder: Klotsche, Ralf, Dipl. -Ing., 75305 Neuenbürg (DE)
(74) Vertreter: Rausch, Gabriele

(56) Entgegenhaltungen:
- EP-A- 0 802 698
- WO-A-00/60590
- WO-A-01/31861
- US-A- 5 953 336
- US-A- 6 011 798

## Beschreibung

Die vorliegende Erfindung betrifft ein Verfahren zur Zuteilung von Zeitschlitzen für eine Übertragung von Daten in variablen Zeitschlitzen zwischen einem Steuergerät eines paketorientierten Datennetzwerks einerseits und einem Endgerät eines Teilnehmers des Datennetzwerks andererseits. Die Zeitschlitze zur Datenübertragung werden einem Endgerät für einen Datenfluss nach Anforderung durch das Endgerät und in Abhängigkeit von der in dem Datennetzwerk zur Verfügung stehenden Übertragungskapazität zugeordnet und in einem Ringpuffer zwischengespeichert, bevor sie dem Endgerät zu einem vorgebbaren Zuteilungszeitpunkt zugeteilt werden.

Die Erfindung betrifft auch ein Steuergerät für ein paketorientiertes Datennetzwerk zur Übertragung von Daten in variablen Zeitschlitzen zwischen dem Steuergerät einerseits und einem Endgerät eines Teilnehmers des Datennetzwerks andererseits. Das Steuergerät umfasst Mittel zum Empfang und zur Verarbeitung einer Anforderung eines Endgeräts nach Zeitschlitzen und Mittel zum Zuteilen von Zeitschlitzen auf die Anforderung des Endgeräts hin. Die Mittel zum Zuteilen ordnen die Zeitschlitze einem Endgerät in Abhängigkeit von der in dem Datennetzwerk zur Verfügung stehenden Übertragungskapazität zu und speichern die zugeordneten Zeitschlitze in einem Ringpuffer zwischen, bevor die Mittel zum Zuteilen die Zeitschlitze dem Endgerät zu einem vorgebbaren Zuteilungszeitpunkt zuteilen.

Schließlich betrifft die vorliegende Erfindung auch ein Computerprogramm, das auf einem Rechengerät, insbesondere auf einem Mikroprozessor, eines Steuergeräts für ein paketorientiertes Datennetzwerk zur Übertragung von Daten in variablen Zeitschlitzen ablauffähig ist.

Ein Verfahren und ein Steuergerät der oben genannten Art ist bspw. aus der EP 0 802 698 A2 bekannt. Dort ist ein Ringpuffer beschrieben, der durch feste obere und untere Zeitschwellen begrenzt ist. Außerdem ist die Position eines Schreibzeigers des Ringpuffers fest, so dass in den Feldern des Ringpuffers Daten ausschließlich sequenziell, d.h. in unmittelbar aneinander grenzende Felder nacheinander Feld für Feld, abgelegt werden können. Der Zuteilungszeitpunkt der abgelegten Daten wird über eine variable Taktrate des Ringpuffers koordiniert.

Aus der WO 00/60590 ist ein Verfahren zum Traffic Policing und Shaping beschrieben. Dabei geht es jedoch um die Frage, wie die in einem Ringpuffer zwischengespeicherten Daten einem Endgerät zur Verfügung gestellt werden. Der Anfang und das Ende eines Schreibbereichs des Ringpuffers wird einerseits durch einen logischen "head" und andererseits einen logischen "tale" definiert. Dadurch kann die Größe des Schreibbereichs des Ringpuffers, nicht jedoch das Feld, in das Daten abgelegt werden, variiert werden. In dem Ringpuffer werden Daten immer an die Stelle des logischen "head" geschrieben.

Die in einem Datennetzwerk zur Verfügung stehende Datenrate wird in erster Linie bestimmt durch die zwischen Anbieter und Teilnehmer vereinbarte minimale Datenrate (sog. Service Level Agreement). In zweiter Linie wird die zur Verfügung stehende Datenrate bestimmt durch die momentane Auslastung des Datennetzwerks durch Datenübertragungsverbindungen. Für die Nutzung des Datennetzwerks wird von dem Teilnehmer üblicherweise ein Entgelt an den Anbieter entrichtet, das abhängig ist von der vereinbarten Datenrate.

Ein Endgerät, das Daten über das Datennetzwerk übertragen möchte, sendet eine Anforderung nach einem oder mehreren Zeitschlitzen an ein Steuergerät des Datennetzwerks. Je nach Verfügbarkeit von Zeitschlitzen bzw. je nach Auslastung des Datennetzwerks teilt das Steuergerät dem Endgerät die angeforderte Anzahl oder weniger Zeitschlitze zu. Bei einer sehr hohen Auslastung kann es sogar vorkommen, dass das Steuergerät die Anforderung des Endgeräts nicht erfüllen kann und ablehnt und ihm überhaupt keine Zeitschlitze zuteilt. Die abgelehnte Anforderung des Endgeräts wird in einer Warteschlange (z.B. einem First-In-First-Out (FIFO)-Speicher) des Steuergeräts abgelegt und zu einem späteren Zeitpunkt, zu dem eine geringere Auslastung des Datennetzwerks vorliegt, erfüllt werden, indem dem Endgerät dann angeforderte aber noch nicht zugeteilte Zeitschlitze zugeteilt werden. In der Warteschlange muss das anfordernde Endgerät und der Datenfluss, für den Zeitschlitze angefordert werden, sowie die Anzahl der angeforderten Zeitschlitze abgelegt werden. Zusätzlich muss jeder Anforderung ein entsprechender Zeitstempel zugeordnet sein. Das Ablegen der abgelehnten Anforderungen in der Warteschlange kann sehr speicherintensiv sein. Bei einer vollen Warteschlange gehen neue Anforderungen verloren.

Aus dem Stand der Technik ist es also bekannt, für die Zuteilung von Zeitschlitzen zu Beginn einer neuen Datenübertragung die Auslastung des gesamten Datennetzwerks bzw. die auf dem Datennetzwerk verfügbare Bandbreite zu berücksichtigen. Wenn einem Endgerät einmal eine bestimmte Anzahl von Zeitschlitzen für die Datenübertragung zugeteilt worden sind, darf der Teilnehmer in diesen seine Daten übertragen, selbst wenn diese Datenübertragung die gesamte oder einen Großteil der Übertragungskapazität des Datennetzwerks beansprucht. Während dieser Zeit können Anforderungen nach Zeitschlitzen von weiteren Endgeräten u.U. nicht vollständig oder überhaupt nicht erfüllt werden. Es kann zu Wartezeiten kommen, bevor die weiteren Endgeräte bedient werden. Für die Datenübertragungen der weiteren Endgeräte kann also keine minimale Antwortzeit garantiert werden, innerhalb der den Endgeräten die angeforderten oder eine minimale Anzahl von Zeitschlitzen zugewiesen werden können. Das kann für Anwendungen, bei denen eine minimale Antwortzeit und eine minimale Datenübertragungsrate sichergestellt werden muss, große Probleme bereiten. Solche Anwendungen werden auch als QoS (Quality of Service)-Anwendungen bezeichnet. Beispiele für QoS-Anwendungen sind VoIP (Voice over Internet Protocol)-Anwendungen.

Bei sog. Transfer-Control-Protocol (TCP)/IP-Anwendungen beginnt die Datenübertragung mit einer relativ kleinen Datenrate. Während einer Datenübertragung wird die Qualität der Datenübertragung beobachtet und, falls diese eine vorgebbare Qualitätsmindestanforderung erfüllt, so lange kontinuierlich gesteigert, bis die Mindestanforderung nicht mehr erfüllt ist. Dann wird die Datenübertragungsrate wieder auf den relativ kleinen Anfangswert reduziert und wieder von neuem langsam gesteigert. Wenn also die Qualität einer TCP/IP-Datenübertragung es zulässt beansprucht eine solche Datenübertragung u.U. einen Großteil der in einem Datennetzwerk zur Verfügung stehenden Bandbreite. Zudem kann eine TCP/IP-Datenübertragung zu einer starken Schwankung der Netzauslastung führen. Das kann ein großer Störfaktor für QoS-Anwendungen sein.

Das erfindungsgemäße Verfahren ist für alle paketorientierte Datennetzwerke anwendbar, in denen die Vergabe von Zeitschlitzen für die Datenübertragung zwischen den Engeräten und dem Steuergerät ausgehandelt werden muss.

Das Datennetzwerk ist bspw. als ein Kabelfernseh-Netzwerk ausgebildet, über das Video- und Audiodaten nach einem vorgebbaren Standard übertragen werden. Der Standard ermöglicht eine Datenübertragung nach dem Verfahren der eingangs genannten Art. Ein konkretes Beispiel für einen solchen Standard ist DVB (Digital Video Broadcasting), das vorwiegend in Europa Anwendung findet, oder DOCSIS (Data Over Cable Service Interface Specification), das insbesondere in den USA Anwendung findet. Bei DVB wird mit einem festen Zeitraster von bspw. drei Millisekunden gearbeitet. Pro Zeitraster werden 9, 18 oder 36 Zeitschlitze übertragen. In DVB sind die zwei untersten Schichten des ISO/OSI-Schichtenmodells spezifiziert, nämlich die physikalische Schicht und die Media Access Control (MAC)-Schicht bzw. Sicherungsschicht.

In letzter Zeit empfangen immer mehr Haushalte Fernsehsignale nicht mehr über Fernsehantenne oder Satelliten, sondern über ein Fernseh-Kabelnetz. Dabei sendet ein Fernsehsender über mehrere Kanäle in einem Fernsehband Video- und Audiosignale über einen sog. Combiner, der im wesentlichen einen Frequenzmultiplexer umfasst, und über das Kabelfernseh-Netzwerk an Fernsehgeräte in den Haushalten. Um das Kabelfernseh-Netzwerk auch für QoS-Anwendungen nutzen zu können, ist eine Vermittlungsvorrichtung (ein sog. Router) vorgesehen, die an das Internet angeschlossen ist. Der Router ist außerdem über eine bidirektionale Verbindung an einen Steuergerät des Netzwerks, einen sog. Interaktiven Netzwerk Adapter (INA), angeschlossen, das seinerseits ebenfalls über eine bidirektionale Verbindung mit dem Combiner in Verbindung steht. Der Router und der INA können in einem Gerät zusammengefasst sein. Die Endgeräte für die QoS-Anwendungen in einem Haushalt sind über sog. Set-Top-Boxen oder Kabelmodem (sog. Cable Modems) an das Kabelfernseh-Netzwerk angeschlossen. Der Combiner übermittelt also sowohl die Video- und Audiosignale des Fernsehsenders als auch die Daten aus dem Internet in die Haushalte, wo sie auf die entsprechenden Endgeräte verteilt werden. Die Video- und Audiosignale werden bspw. an ein Fernsehgerät und die Internetdaten an einen Computer weitergeleitet. Für VoIP-Anwendungen ist der Computer mit geeigneten Erweiterungen ausgerüstet, die eine Ausgabe und Eingabe von Sprache ermöglichen.

In dem Kabelfernseh-Netzwerk sind standardmäßig auch Rückkanäle vorgesehen, die eine sog. Upstream-Verbindung von den Endgeräten zu dem INA ermöglichen. Die Rückkanäle weisen jedoch im Vergleich zu den Downstream-Kanälen nur eine geringe Bandbreite auf. Für bestimmte Datenanwendungen werden jedoch auch über den Rückkanal relativ viele Daten übertragen. Auch über den Rückkanal muss eine bestimmte Qualität der Datenübertragung garantiert werden können (z.B. für QoS-Anwendungen). Die Qualität einer Datenübertragung umfasst insbesondere eine vorgebbare minimale Übertragungsrate, eine begrenzte Verzögerungszeit (d.h. Übertragungszeit der einzelnen in den Zeitschlitzen übertragenen Datenpakete) und einen begrenzten Jitter (d.h. Schwankung der Übertragungszeit der einzelnen übertragenen Datenpakete).

Die Kontrolle und Koordination einer Datenübertragung umfasst das sog. Policing (d. h. den einzelnen Datenflüssen eine begrenzte Anzahl von Zeitschlitzen zuzuteilen, um eine geforderte Datenrate zu erzielen) und das sog. Shaping (d. h. Zeitschlitze zuzuteilen, um die in dem Datennetzwerk zur Verfügung stehende Bandbreite optimal auszunutzen). In Kabelfernseh-Netzwerken stellt der Rückkanal aufgrund seiner geringen Bandbreite einen Flaschenhals für die Datenübertragung dar. Falls Funktionen wie Policing und Shaping in einem sog. Access-Router des Datennetzwerks erst in der dritten Schicht von unten, der sog. IP-Schicht, des ISO/OSI-Schichtenmodells ausgeführt werden, haben die übertragenen Datenpakete den Flaschenhals bereits passiert. Falls im Rahmen des Policing und Shaping in dem Access-Router bereits über den Rückkanal übertragene Datenpakete fallengelassen würden, bedeutete dies einen Verlust an Bandbreite.

Aus dem Stand der Technik (z. B. aus der EP 1 056 244 A2) ist der Einsatz von Ringpuffern als Warteschlangen bekannt. Der Ringpuffer dreht sich mit einer vorgebbaren Taktrate. Die bekannten Ringpuffer verfügen über einen Schreibzeiger und einen Lesezeiger, die jeweils auf (zeitlich) festgelegte Schreib- bzw. Lesepositionen in dem Ringpuffer zeigen. Der Ringpuffer dreht sich also relativ zu der Schreib- und Leseposition, so dass nach einer vollständigen Umdrehung des Ringpuffers jedes Feld einmal an der Schreibposition und einmal an der Leseposition war.

Ein solcher bekannter Ringpuffer kann aber für die Zuteilung von variablen Zeitschlitzen für eine Datenübertragung in einem paketorientierten Datennetzwerk nicht eingesetzt werden. Dabei werden u. U. Datenflüsse mit schwankenden Zuteilungszeitpunkten verarbeitet. Ein erster verarbeiteter Datenfluss hat bspw. einen Zuteilungszeitpunkt in 30 ms, der nächste verarbeitete Datenfluss hat bspw. einen Zuteilungszeitpunkt in 28 ms und wieder der nächste verarbeitete Datenfluss hat bspw. einen Zuteilungszeitpunkt in 32 ms. Daher ist es erforderlich, dass der Schreibzeiger und/oder der Lesezeiger (zeitlich) variabel ist, damit in Abhängigkeit von dem genauen Zuteilungszeitpunkt eines jeden Datenflusses die einem Endgerät für den Datenfluss zugeordneten Zeitschlitze in dem entsprechenden Feld des Ringpuffers abgelegt werden können.

Der vorliegenden Erfindung liegt die Aufgabe zugrunde, die Zuteilung von Zeitschlitzen in einem Datennetzwerk, in dem Daten über variable Zeitschlitze übertragen werden, zu vereinfachen und zu beschleunigen.

Zur Lösung dieser Aufgabe schlägt die vorliegende Erfindung ausgehend von dem Verfahren der eingangs genannten Art vor, dass in dem Ringpuffer ein zeitlicher Schreibbereich durch eine variable erste obere Zeitschwelle (Maximum Granting Threshold) und eine variable erste untere Zeitschwelle (Minimum Granting Threshold) definiert wird, dass in Abhängigkeit von dem Zuteilungszeitpunkt eine Position eines Schreibzeigers auf ein Feld des Ringpuffers innerhalb des Schreibbereichs derart ermittelt wird, dass er auf ein Feld des Ringpuffers zeigt, das sich bei einer vorgegebenen Taktrate des Ringpuffers zum Zuteilungszeitpunkt des Datenflusses an einer Position befindet, an der der Inhalt des Feldes ausgelesen wird, und dass die dem Endgerät für den Datenfluss zugeordneten Zeitschlitze in einem der Position des Schreibzeigers entsprechenden Feld abgelegt werden.

Erfindungsgemäß wird vorgeschlagen, jeden Datenfluss in dem Datennetzwerk gesondert zu betrachten und gesondert zu verarbeiten. Nach dem Eingang einer Anforderung eines Endgeräts des Datennetzwerks wird die Anforderung einem bestimmten Datenfluss in dem Datennetzwerk zugeordnet. Eine dem Datenfluss zugeordnete Gesamtsumme wird um die Anzahl der angeforderten Zeitschlitze erhöht.

Der Zuteilungszeitpunkt eines Datenflusses kann entweder absolut oder als eine relative Wartezeit (ausgehend von der aktuellen Zeit bis zum Zeitpunkt der Zuteilung von Zeitschlitzen) angegeben werden. Der Zuteilungszeitpunkt bzw. die Wartezeit eines Datenflusses werden im Rahmen der Kontrolle und Koordination der Datenübertragung vor der Zuteilung der Zeitschlitze ermittelt. Die Kontrolle und Koordination umfasst das sog. Policing (d. h. den einzelnen Datenflüssen eine begrenzte Anzahl von Zeitschlitzen zuzuteilen, um eine geforderte Datenrate zu erzielen) und das sog. Shaping (d. h. Zeitschlitze zuzuteilen, um die in dem Datennetzwerk zur Verfügung stehende Bandbreite optimal auszunutzen).

Je länger die Wartezeit eines Datenflusses ist, desto geringer ist die Datenübertragungsrate des Datenflusses. Die Wartezeit darf höchstens so lang gewählt werden, dass eine vereinbarte minimale Übertragungsrate noch erzielt wird. Andererseits sollte die Wartezeit mindestens so lang gewählt werden, dass die Datenübertragung über den Datenfluss nicht zu viel Bandbreite beansprucht, da sonst für die übrigen Datenflüsse keine oder nicht genug Bandbreite zur Verfügung steht.

Über die Wartezeit kann die Datenübertragungsrate des Datenflusses beeinflusst werden; je länger die Wartezeit ist, desto geringer ist die Datenrate. Die Wartezeit eines Datenflusses erlaubt also eine Drosselung der Datenraten des Datenflusses, im Extremfall sogar bis hin zu Null. Mit Hilfe der Wartezeit kann eine effektive Kontrolle und Koordination der Datenübertragung realisiert werden, da anhand der Wartezeit eine vorausschauende Zuordnung der Zeitschlitze möglich ist. Die vorausschauende Zuordnung und Zuteilung der Zeitschlitze ist Gegenstand der vorliegenden Erfindung.

Die Wartezeiten der Datenflüsse können in verschiedene Kategorien (sog. Policy Levels) unterteilt werden. Die Zuteilung von Zeitschlitzen geschieht dann in Abhängigkeit von der aktuellen Policy Level des Datenflusses. Von einer Policy-Level können Datenflüsse mit unterschiedlichen Wartezeiten umfasst sein. Bei der Verarbeitung der Datenflüsse aus ein und derselben Policy-Level kann es also vorkommen, dass die Wartezeiten bzw. die Zuteilungszeiten von nacheinander verarbeiteten Datenflüssen schwanken und die einem Datenfluss zugeordneten Zeitschlitze einmal vor, einmal nach und einmal genau zum aktuellen Zeitpunkt abgelegt werden müssen. Mit der vorliegenden Erfindung ist es möglich, die Zeitschlitze der verarbeiteten Datenflüsse innerhalb eines Schreibbereichs des Ringpuffers genau in dem gewünschten Feld abzulegen. Durch die vorliegende Erfindung kann eine vorausschauende Zuteilung von Zeitschlitzen auf eine besonders einfache Weise durchgeführt werden.

Die Position des Schreibzeigers wird idealerweise derart ermittelt, dass er auf ein Feld des Ringpuffers zeigt, das sich bei einer vorgegebenen Taktrate, mit der sich der Ringpuffer jeweils um ein Feld weiterdreht, genau zum Zuteilungszeitpunkt des aktuell bearbeiteten Datenflusses an einer Position befindet, an der der Inhalt des Feldes ausgelesen wird. Dadurch können einem Datenfluss zugeordnete Zeitschlitze, die in dem Feld abgelegt werden, auf das der Schreibzeiger zeigt, genau zum Zuteilungszeitpunkt des Datenflusses aus dem Ringpuffer ausgelesen und dem Datenfluss zugeteilt werden. Der Ringpuffer ist also ein Zwischenspeicher mit der Möglichkeit, die Zuteilung von Zeitschlitzen zu koordinieren.

Durch den Schreibbereich wird ein Zuordnungszeitraum vorgegeben, innerhalb dessen die im Voraus geplante Zuordnung von Zeitschlitzen erfolgt. Falls der Zuteilungszeitpunkt eines aktuell bearbeiteten Datenflusses noch so weit entfernt von der aktuellen Zeit ist, dass die diesem Datenfluss zugeordneten Zeitschlitze außerhalb des definierten Schreibbereichs abgelegt werden müssten, wird die Zuordnung von Zeitschlitzen für diesen Datenfluss auf einen späteren Zeitpunkt verschoben. Zu dem späteren Zeitpunkt können die dem Datenfluss zugeordneten Zeitschlitze dann innerhalb des Schreibbereichs abgelegt werden. Durch den Schreibbereich wird also eine zeitlich überschaubare, geordnete Zuordnung von Zeitschlitzen ermöglicht.

Durch die variablen Zeitschwellen des Schreibbereichs kann die Größe des Zuteilungszeitraums an die aktuellen Anforderungen angepasst werden. Um die Kapazität des Ringpuffers zu vergrößern, kann die erste obere Zeitschwelle nach spät verschoben werden. Dadurch können auch Datenflüsse mit weiter entfernt liegende Zuteilungszeitpunkte verarbeitet werden. Andersherum kann die Kapazität des Ringpuffers verringert werden, indem die erste obere Zeitschwelle nach früh verschoben wird. Wenn die aus dem Ringpuffer ausgelesenen Daten langsamer, bspw. in die MAC-Schicht, abtransportiert werden, kann die erste untere Zeitschwelle nach spät verschoben werden, um einen Lesebereich, innerhalb dessen die Daten aus dem Ringpuffer ausgelesen werden, zu vergrößern.

Gemäß einer vorteilhaften Weiterbildung der vorliegenden Erfindung wird vorgeschlagen, dass ein zeitlicher Lesebereich durch die variable erste untere Zeitschwelle (Minimum Granting Threshold) und eine zweite untere Zeitschwelle (Now on the Wire) definiert wird, ein Lesezeiger in Abhängigkeit von einer Geschwindigkeit, mit der die ausgelesenen Zeitschlitze zu den Endgeräten transportiert werden, auf ein Feld des Ringpuffers innerhalb des Lesebereichs zeigt und die dem Endgerät für den Datenfluss zugeordneten Zeitschlitze aus dem Feld, auf das der Lesezeiger zeigt, entnommen werden.

Gemäß einer bevorzugten Ausführungsform der vorliegenden Erfindung wird vorgeschlagen, dass zum Ablegen der zugeordneten Zeitschlitze in dem Ringpuffer das Feld innerhalb des Schreibbereichs ermittelt wird, auf das der Schreibzeiger zeigt, und der Schreibzeiger auf das nächstliegende freie Feld innerhalb des Schreibbereichs versetzt wird, falls das ermittelte Feld bereits belegt ist. Wenn die einem Datenfluss zugeordneten Zeitschlitze immer in dem idealerweise ermittelten Feld des Ringpuffers abgelegt werden können, ist der Jitter der Datenübertragung über diesen Datenfluss nahezu Null. Je weiter das Feld, in dem die dem Datenfluss zugeordneten Zeitschlitze abgelegt werden, von dem idealerweise ermittelten Feld entfernt ist, desto größer wird der Jitter. Durch geeignete Vorgaben für den Datenfluss und durch eine geeignete Auslegung des Ringpuffers kann erreicht werden, dass für Datenflüsse im Rahmen von QoS-Anwendungen stets genügend freie Felder in dem Ringpuffer vorhanden sind, damit die einem Datenfluss einer QoS-Anwendung zugeordneten Zeitschlitze immer möglichst nah an dem idealerweise ermittelten Feld abgelegt werden können.

Vorteilhafterweise wird ein zeitlicher Definitionsbereich durch eine zweite obere Zeitschwelle (End of Defined List) und die variable erste obere Zeitschwelle (Maximum Granting Threshold) zeitlich nach dem Schreibbereich definiert. In dem zeitlichen Definitionsbereich werden Felder in dem Schreibbereich als bestimmte Typen definiert. Über geeignete Einträge in dem Definitionsbereich können bspw. bestimmte Felder des Ringpuffers für Datenflüsse von QoS-Anwendungen reserviert werden. Ein solcher Definitionsbereich wird bspw. bei DVB für die sog. Ranging Contention Reservation benutzt.

Vorzugsweise wird zum Ablegen der zugeordneten Zeitschlitze in dem Ringpuffer das Feld innerhalb des Schreibbereichs ermittelt, auf das der Schreibzeiger zeigt, und der Schreibzeiger auf das nächstliegende Feld eines vorgegebenen Typs innerhalb des Schreibbereichs versetzt, falls das ermittelte Feld nicht von dem vorgegebenen Typ ist.

Als eine weitere Lösung der Aufgabe der vorliegenden Erfindung wird ausgehend von dem Steuergerät der eingangs genannten Art vorgeschlagen, dass die Mittel zum Zuteilen umfassen:
- Mittel zum Definieren eines zeitlichen Schreibbereichs in dem Ringpuffer durch eine variable erste obere Zeitschwelle (Maximum Granting Threshold) und eine variable erste untere Zeitschwelle (Minimum Granting Threshold);
- Mittel zum Bestimmen einer Position eines Schreibzeigers auf ein Feld des Ringpuffers innerhalb des Schreibbereichs in Abhängigkeit von dem Zuteilungszeitpunkt, wobei die Mittel die Position des Schreibzeigers derart ermitteln, dass er auf ein Feld des Ringpuffers zeigt, das sich bei einer vorgegebenen Taktrate des Ringpuffers zum Zuteilungszeitpunkt des Datenflusses an einer Position befindet, an der der Inhalt des Feldes ausgelesen wird,; und
- Mittel zum Ablegen der dem Endgerät für den Datenfluss zugeordneten Zeitschlitze in einem der Position des Schreibzeigers entsprechenden Feld.

In einem ISO/OSI-Schichtenmodell betrachtet, ist in dem Steuergerät eine Schnittstelle realisiert, die QoS-Anforderungen aus der IP (Internet Protocol)-Schicht und darüber liegenden Schichten auf die MAC (Media Access Control)-Schicht (sog. Sicherungsschicht) abbildet.

Gemäß einer vorteilhaften Weiterbildung der vorliegenden Erfindung wird vorgeschlagen, dass das Steuergerät Mittel zur Ausführung eines Verfahrens nach einem der Ansprüche 2 bis 5 aufweist.

Von besonderer Bedeutung ist die Realisierung des erfindungsgemäßen Verfahrens in der Form eines Computerprogramms, das auf einem Rechengerät, insbesondere auf einem Mikroprozessor, eines Steuergeräts für ein Datennetzwerk zur Übertragung von Daten in variablen Zeitschlitzen ablauffähig und zur Ausführung des erfindungsgemäßen Verfahrens geeignet ist. Vorzugsweise ist das Computerprogramm auf einem Speicherelement abgespeichert, das für das Steuergerät vorgesehen ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Es zeigen:
- Figur 1: eine vereinfachte Darstellung eines Datennetzwerks zur Realisierung eines erfindungsgemäßen Verfahrens;
- Figur 2: eine schematische Darstellung eines Datennetzwerks zur Realisierung eines erfindungsgemäßen Verfahrens;
- Figur 3: eine schematische Darstellung eines erfindungsgemäßen Steuergeräts des Datennetzwerks aus Figur 1;
- Figur 4: einen Ringpuffer des Steuergeräts auf Figur 3;
- Figur 5: ein Ablaufdiagramm eines erfindungsgemäßen Verfahrens;
- Figur 6: ein Ablaufdiagramm einer Task zur Verarbeitung von Anforderungen im Rahmen des erfindungsgemäßen Verfahrens aus Figur 5; und
- Figur 7: das Steuergerät aus Figur 3 in einer anderen Ansicht.

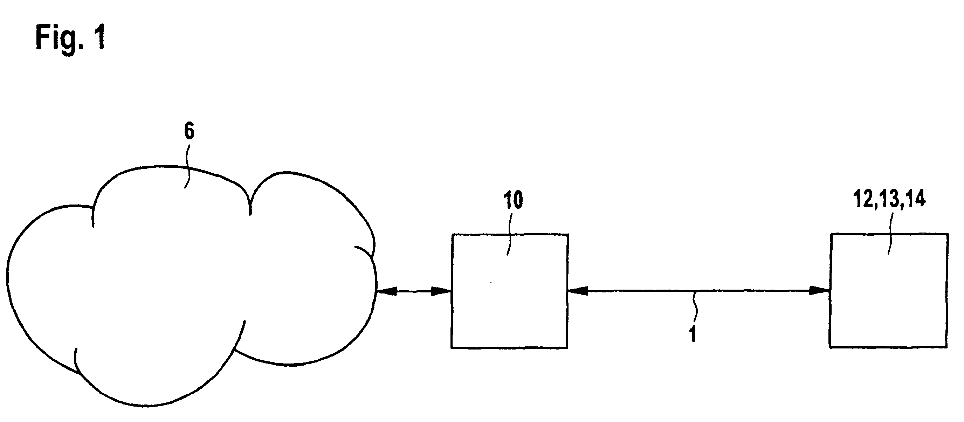

In Figur 1 ist ein Datennetzwerk zur Realisierung eines erfindungsgemäßen Verfahrens in seiner Gesamtheit mit dem Bezugszeichen 1 bezeichnet. Das Datennetzwerk 1 erstreckt sich zwischen einem Steuergerät 10 des Datennetzwerks 1 und einem Endgerät 13, 14. Über das Datennetzwerk werden Daten in variablen Zeitschlitzen übertragen.

Das Steuergerät 10 ist bspw. als ein sog. Interaktiver Netzwerk Adapter (INA) eines Kabelfernseh-Netzwerks und das Endgerät 13, 14 bspw. als ein Telefon 14 oder als ein entsprechend ausgestatteter Computer 13 ausgebildet. Der INA steht bspw. mit dem Internet 6 in Verbindung. Mit der vorliegenden Erfindung ist es bspw. möglich, über das Kabelfernseh-Netzwerk Internet-Datenübertragungen mit einer vorgebbaren Mindestübertragungsrate abzuwickeln.

Ebenso kann das Steuergerät 10 als eine Satelliten-Sende-/Empfangsstation eines Statellitennetzwerks und das Endgerät 13, 14 bspw. als ein Satellitentelefon oder als ein entsprechend ausgestatteter Computer ausgebildet sein. Die Satelliten-Sende-/Empfangsstation steht bspw. über ein Satellitennetzwerk 6 mit weiteren Satelliten-Sende-/Empfangsstationen in Verbindung. Mit der vorliegenden Erfindung ist es auch möglich, Daten mit einer garantierten Datenübertragungsrate über das Satellitennetzwerk zu übertragen. Das ist bspw. für Satellitentelefonie mit und ohne Video vorteilhaft.

Die vorliegende Erfindung ist also überall dort einsetzbar, wo im Rahmen einer Datenübertragung in variablen Zeitschlitzen über beliebige physikalische Datennetzwerke 1 eine vorgebbare Qualität der Datenübertragung über den Datenfluss, wie bspw. minimale Übertragungsrate, begrenzte Verzögerungszeit (d.h. Übertragungszeit der einzelnen in den Zeitschlitzen übertragenen Datenpakete) und begrenzter Jitter (d.h. Schwankung der Übertragungszeit der einzelnen übertragenen Datenpakete), erfüllt werden muss.

Die Qualität einer Datenübertragung umfasst insbesondere eine vorgebbare minimale Übertragungsrate, eine begrenzte Verzögerungszeit (d.h. Übertragungszeit der einzelnen in den Zeitschlitzen übertragenen Datenpakete) und einen begrenzten Jitter (d.h. Schwankung der Übertragungszeit der einzelnen übertragenen Datenpakete). Diese Vorgaben an die Qualität können zumindest teilweise zwischen einem Diensteanbieter und einem Teilnehmer vereinbart werden. Anwendungen, die sehr strenge Anforderungen an die Qualität der Datenübertragung stellen werden als QoS (Quality of Service)-Anwendungen bezeichnet. Die Qualität der Datenübertragung über einen Datenfluss kann auch in verschiedene Kategorienen (sog. QoS-Levels) unterteilt werden.

Nicht für alle Datenübertragungen, die über das Netzwerk 1 erfolgen, ist eine mininmale Datenübertragungsrate erforderlich. Es gibt auch sog. Best-Effort-Anwendungen (z.B. Datenübertragungen nach dem TCP/JP-Standard), bei denen die Datenübertragung nicht zeitkritisch ist und die Daten übertragen werden, wenn das Netzwerk Übertragungskapazitäten frei hat. Die Datenrate von Best-Effort-Anwendungen wird reduziert, falls im Rahmen von QoS-Anwendungen Zeitschlitze für die Datenübertragung angefordert und zugeteilt werden müssen. Falls es also die Zuteilung von Zeitschlitzen für QoS-Anwendungen erforderlich macht, wird die Anzahl der Zeitschlitze, die für Best-Effort-Anwendungen zugeteilt werden, reduziert. Dadurch können die zugesicherten Vorgaben für die QoS-Anwendungen, insbesondere eine garantierte Übertragungsqualität, unabhängig von der Auslastung des gesamten Datennetzwerks stets erfüllt werden. Die Zuteilung von Zeitschlitzen für einen Datenfluss einer Best-Effort-Anwendung erfolgt also nicht nur in Abhängigkeit der Datenrate des Datenflusses, sondern auch in Abhängigkeit von den Datenraten von Datenflüssen anderer Anwendungen (z.B. QoS-Anwendungen). Durch eine Bevorzugung der QoS-Anwendungen gegenüber den Best-Effort-Anwendungen bei der Zuteilung vorhandener Zeitschlitze zur Datenübertragung kann zudem eine Überlastung des Datennetzwerks verhindert werden.

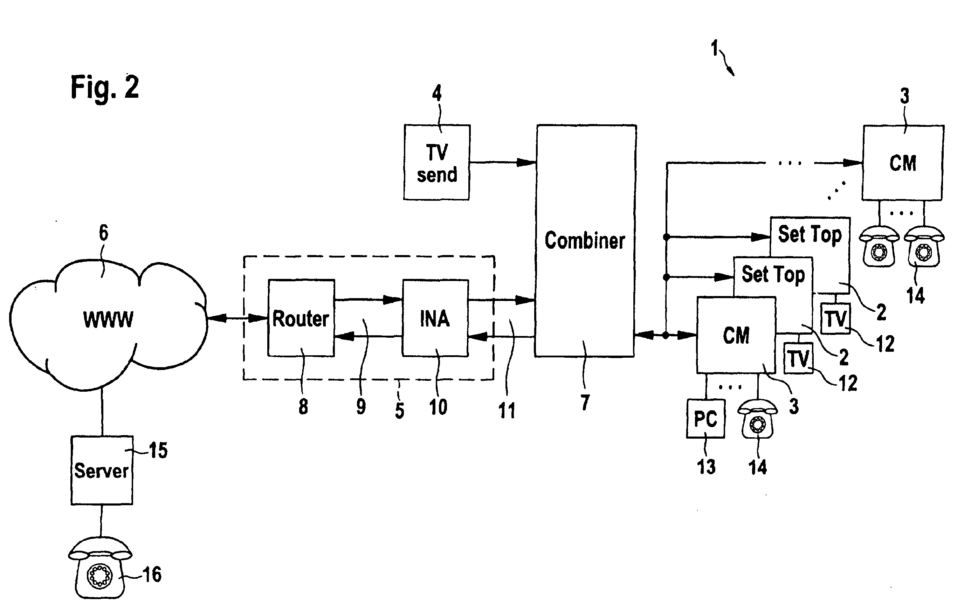

In Figur 2 ist ein bevorzugtes Ausführungsbeispiel des Datennetzwerks 1 aus Figur 1 dargestellt. Das Datennetzwerk 1 ist als ein Kabelfernseh-Netzwerk ausgebildet. Über das Datennetzwerk 1 sind Endgeräte 12, 13, 14 von Teilnehmern des Datennetzwerks mit mindestens einem Diensteanbieter verbunden. Der Diensteanbieter ist bspw. ein Kabelfernsehbetreiber, mit dem als Fernsehgeräte 12 ausgebildete Endgeräte über das Kabelfernseh-Netzwerk 1 in Verbindung stehen. Bei dem Kabelfernsehbetreiber ist ein Fernsehsender 4 angeordnet, der über das Kabelfernseh-Netzwerk 1 Fernsehsignale an die Fernsehgeräte 12 überträgt. Die Fernsehgeräte 12 sind über sog. Set-Top-Boxen 2 an das Kabelfernseh-Netzwerk 1 angeschlossen. Der Diensteanbieter kann auch ein Internet-Service-Provider sein, mit dem als Computer 13 oder Telefongeräte 14 ausgebildete Endgeräte über das Kabelfernseh-Netzwerk 1 in Verbindung stehen. Bei dem Internet-Service-Provider ist ein INA 10 angeordnet, der über einen Router 8 mit einem Internet Protocol (IP)-Backbone-Netzwerk 6, z.B. dem Internet 6, in Verbindung steht. Der INA 10 und der Router 8 können auch zu einer Geräteeinheit 5 zusammengefasst sein. Der Fernsehsender 4 und die Geräteeinheit 5 können auch Teil des Internet 6 sein.

Über das Datennetzwerk 1 werden Video- und Audiosignale von dem Fernsehsender 4 an die Set-Top-Boxen 2 nach einem vorgebbaren Standard übertragen. Konkrete Beispiele für einen solchen Standard sind DVB (Digital Video Broadcasting), das vorwiegend in Europa Anwendung findet, und DOCSIS (Data Over Cable Service Interface Specification), das insbesondere in den USA Anwendung findet. Die Video- und Audiosignale werden über mehrere Kanäle in einem Fernsehband übertragen.

Um das Kabelfernseh-Netzwerk 1 auch für beliebige Datenanwendungen nutzen zu können, ist ein Combiner 7 vorgesehen, der die Datensignale und die Fernsehsignale nach Art eines Multiplexers verbindet und über das Kabelfernseh-Netzwerk 1 an die Endgeräte 12, 13, 14 leitet. Beispiele für Datenanwendungen sind Transfer-Control-Protokoll (TCP)/IP-Anwendungen (sog. Web Browsing) und Quality of Service (QoS)-Anwendungen (z. B. VoIP (Voice over Internet Protocol)-Anwendungen) mit besonderen Vorgaben an die Übertragungsqualität.

Der Router 8 leitet IP-Datenpakete von dem Kabelfernseh-Netzwerk 1 an das Internet 6 weiter. Der Router 8 ist außerdem über eine bidirektionale Verbindungsleitung 9 an den Interaktiven Netzwerk Adapter (INA) 10 angeschlossen, der seinerseits ebenfalls über eine bidirektionale Verbindungsleitung 11 mit dem Combiner 7 in Verbindung steht. Der Router 8 und der INA 10 können auch in einem einzigen Gerät zusammengefasst sein.

Die von dem Fernsehsender 4 ausgesandten Fernsehsignale werden über den Combiner 7 und das Kabelfernseh-Netzwerk 1 an die Set-Top-Boxen 2 und weiter an die Fernsehgeräte 12 übertragen. Die Set-Top-Boxen 2 trennen verschiedene über das Kabelfernseh-Netzwerk übertragene Daten wieder auf. Die IP-Datenpakete aus dem Internet 6 werden über den Router 8, den INA 10, den Combiner 7 und das Kabelfernseh-Netzwerk 1 an Kabelmodems (sog. Cable Modems) 3 und weiter an Telefone 14 oder entsprechend ausgestattete Computer 13 übertragen. Die Kabelmodems 3 dienen zum Empfangen des Datendienstes über das Kabelfernseh-Netzwerk 1.

An die Set-Top-Boxen 2 sind Fernsehgeräte 12, Videorecorder oder andere Geräte angeschlossen, die zum Empfang und zur Verarbeitung der Video- und Audiosignale geeignet sind. An die Kabelmodems 3 sind Engeräte angeschlossen, die zur Nutzung der angebotenen Datenanwendung geeignet sind, wie bspw. Computer 13 oder Telefone 14. Für VoIP-Anwendungen sind die Computer 13 mit geeigneten Erweiterungen ausgerüstet, die eine Ausgabe und Eingabe von Sprache ermöglichen. Über einen Internetserver 15 ist ein weiteres Telefongerät 16 an das Internet 6 angeschlossen. Im Rahmen einer VoIP-Anwendung werden bspw. Audiodaten zwischen dem Telefongerät 16 und einem geeigneten Endgerät 13, 14 übertragen.

In einem Kabelfernseh-Netzwerk 1 sind standardmäßig auch Rückkanäle vorgesehen, die eine sog. Upstream-Verbindung von den Endgeräten 12, 13, 14 zu dem INA 10 ermöglichen. Die Rückkanäle werden bspw. für Video auf Abruf (sog. Video on Demand) und für eine Vielzahl von Datenanwendungen benötigt. Für bestimmte Datenanwendungen, bspw. für VoIP-Anwendungen, werden auch über den Rückkanal relativ viele Daten übertragen. Die Rückkanäle weisen jedoch nur eine geringe Bandbreite auf, wodurch sich eine Beeinträchtigung der Übertragungsqualität ergeben kann. Auch über den Rückkanal sollte für bestimmte Datenanwendungen eine vorgebbare Qualität der Datenübertragung garantiert werden können (z.B. für QoS-Anwendungen).

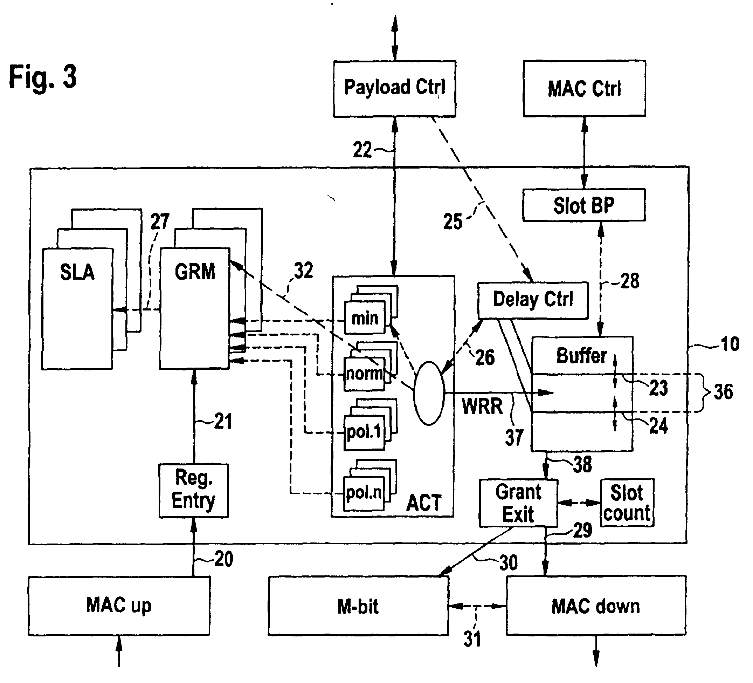

In Figur 3 ist ein erfindungsgemäßes Steuergerät 10 für ein Datennetzwerk 1 gemäß einer bevorzugten Ausführungsform dargestellt. Das Steuergerät 10 ist als ein Interaktiver Netzwerk Adapter (INA) ausgebildet. Es verarbeitet eingehende Anforderungen 20 der Endgeräte 12, 13, 14 nach Zeitschlitzen für eine Datenübertragung (MAC up) über das Datennetzwerk 1. Das Endgerät, 12, 13, 14, das Daten über das Datennetzwerk 1 übertragen möchte, sendet eine Anforderung 20 nach einem oder mehreren Zeitschlitzen an das Steuergerät 10. Je nach Verfügbarkeit von Zeitschlitzen bzw. je nach Auslastung des gesamten Datennetzwerks 1 teilt das Steuergerät 10 dem Endgerät 12, 13, 14 die angeforderte Anzahl oder weniger Zeitschlitze zu (MAC down). Die Einheit MAC Message Handler Upstream (MAC up) dient zum Extrahieren der Anforderungen aus Datenpaketen der MAC-Schicht (Sicherungsschicht) eines ISO/OSI-Schichtenmodells. Die Einheit MAC Message Handler Downstream (MAC down) dient zum Verpacken der Daten über die zugeteilten Zeitschlitze in Datenpaketen der MAC-Schicht.

In dem Steuergerät 10 werden die Anforderungen 20 über eine Durchreicheeinheit Grant Request Entry (Req. Entry) an sog. Grant Request Meter (GRM) weitergeleitet. Für jeden Datenfluss (sog. Data Flow) in dem Datennetzwerk 1 ist ein eigenes Grant Request Meter (GRM) vorgesehen. Als ein Datenfluss wird eine paketorientierte (keine leitungsorientierte) Verbindung zwischen einem der Endgeräte 12, 13, 14 des Datennetzwerks 1 und einem der Diensteanbieter 4, 5 bezeichnet. In der Einheit Grant Request Entry (Req. Entry) werden Parameter der Anforderungen 20 auf die Datenflüsse umgesetzt und an den Grant Request Meter (GRM) des entsprechenden Datenflusses übergeben.

In den Grant Request Meter (GRM) werden Gesamtsummen aller Anforderungen von Zeitschlitzen zur Datenübertragung für die einzelnen Datenflüsse geführt. Beim Eintreffen einer neuen Anforderung 20 nach Zeitschlitzen für einen bestimmten Datenfluss wird die Gesamtsumme des entsprechenden Grant Request Meters (GRM) um die angeforderte Anzahl an Zeitschlitzen erhöht. Nach jeder Zuteilung 29 von Zeitschlitzen für einen bestimmten Datenfluss wird die Gesamtsumme des entsprechenden Grant Request Meters (GRM) um die zugeteilte Anzahl an Zeitschlitzen verringert. Die Gesamtsummen stellen ein Maß für die Datenmenge dar, für die Übertragungskapazität angefordert ist. Die in den Grant Request Metern (GRM) geführten Gesamtsummen lösen die aus dem Stand der Technik bekannten Warteschlangen für die Anforderungen ab. Durch die Einführung der Gesamtsummen ist eine schnellere Verarbeitung möglich. Zudem wird ein Überlauf der Warteschlange und ein Verlust die Kapazität der Warteschlangen übersteigender Anforderungen vermieden. Schließlich benötigen die Gesamtsummen einen deutlich verringerten Speicherplatzbedarf gegenüber den Warteschlangen. Den Gesamtsummen in den einzelnen Grant Request Meter (GRM) sind jeweils bestimmte Service Level Agreements (SLA) zugeordnet, in denen verschiedene Vorgaben an den entsprechenden Datenfluss abgelegt sind. Üblicherweise gibt es weniger Service Level Agreements (SLA) als Datenflüsse in dem Datennetzwerk 1, so dass mehreren Datenflüssen das gleiche Service Level Agreement (SLA) zugeordnet sein kann. Die Vorgaben umfassen bspw. Informationen darüber, wie ein Datenfluss im Rahmen einer bestimmten Anwendung gehandhabt werden muss. Die Vorgaben umfassen insbesondere bestimmte Qualitätsanforderungen an die Datenübertragung über die Datenflüsse.

Das Steuergerät 10 umfasst außerdem eine Einheit Active Flows (ACT), in der die vorliegende Erfindung realisiert ist. In der Einheit Active Flows (ACT) sind alle aktiven Datenflüsse in einer mehrdimensionalen Tabelle abgelegt. In dem vorliegenden Ausführungsbeispiel hat die Tabelle eine zweidimensionale Erstreckung, wobei die eine Dimension der Tabelle von Vorgaben an die Qualität der Datenübertragung über einen Datenfluss (sog. QoS-Level) und die andere Dimension von einer Zuteilungspriorität (sog. Policy-Level) des Datenflusses abhängig ist. Die Zuteilungspriorität wird von einer Wartezeit repräsentiert, die der Differenz zwischen dem Zeitpunkt der geplanten Zuteilung von Zeitschlitzen für den Datenfluss und der aktuellen Zeit entspricht. Anhand der QoS-Level kann bspw. unterschieden werden zwischen einem Datenfluss für eine Best-Effort-Anwendung und einem Datenfluss für eine QoS-Anwendung. Außerdem kann anhand der QoS-Level zwischen verschiedenen Anforderungen an die QoS-Anwendungen unterschieden werden. Die QoS-Level und weitere Vorgaben an die Qualität der Datenübertragung der Datenflüsse sind in dem Service Level Agreement (SLA) abgelegt.

In den Feldern der Tabelle sind Referenzen (Verweise) auf Objekte der Datenflüsse abgelegt. Dadurch kann ein erhebliches Maß an Speicherplatz eingespart werden. Zudem ist eine wesentlich schnellere Abarbeitung der Tabelle möglich. Die Referenzen auf die Datenflüsse sind in Abhängigkeit von der dem entsprechenden Datenfluss zugeordneten Policy-Level und von der dem Datenfluss zugeordneten QoS-Level in den Feldern der Tabelle abgelegt.

Zur Zuteilung von Zeitschlitzen werden Datenflüsse aus der Tabelle nach einer vorgebbaren Strategie herausgegriffen. Die vorgebbare Zuteilungsstrategie umfasst die Reihenfolge der Bearbeitung der in den Feldern der Tabelle abgelegten Datenflüsse. Es ist der Einsatz verschiedener Strategien denkbar. Die Strategien sollten lediglich derart ausgelegt sein, dass vorab vereinbarte Qualitätsvorgaben für Datenflüsse von QoS-Anwendungen auf jeden Fall eingehalten werden können.

Die Wartezeit eines Datenflusses wird um ein variables Wartezeitinkrement erhöht, wenn wenn dem Datenfluss Zeitschlitze zugeteilt worden sind. Die Größe des Wartezeitinkrements ist abhängig von der Anzahl der zugeteilten Zeitschlitze und von den für die Datenübertragung über diesen Datenfluss vereinbarten Qualitätsanforderungen. Mit fortschreitender Zeit wird die Wartezeit verringert.

Die Wartezeiten der aktiven Datenflüsse sind in verschiedene Kategorien, sog. Policy-Levels, unterteilt. Wenn die Wartezeit eines Datenflusses nach einer Erhöhung um das Wartezeitinkrement eine obere Zeitgrenze der bisherigen Policy-Level übersteigt, wird dem Datenfluss die nächst niedrigere Policy Level zugeordnet. Wenn die Wartezeit mit der Zeit kleiner wird, sind auch Sprünge in die nächst höhere Policy Level möglich. Es sind auch Sprünge um mehrere Policy-Levels auf einmal möglich. Durch die Einführung der Policy-Levels wird die Handhabung der einzelnen Datenflüsse deutlich vereinfacht. In der Tabelle in der Einheit Active Flows (ACT) sind die aktiven Datenflüsse also in Abhängigkeit von der QoS-Level und der Policy-Level in verschiedenen Feldern abgelegt.

In der Einheit Active Flows (ACT) ist ein Zuteilungsverfahren in Form eines sog. Weighted Round Robin (WRR) vorgesehen. In dem Weighted Round Robin (WRR) werden die Bearbeitungszeiten für die einzelnen Datenflüsse für die Zuteilung der Zeitschlitze festgelegt. In dem Weighted Round Robin (WRR) wird festgelegt, wie die Informationen aus der Tabelle weiter verschoben werden; es werden Gewichte verteilt und die zur Verfügung stehende Prozessorzeit wird auf die zu verarbeitenden Datenflüsse verteilt.

Der Weighted Round Robin (WRR) schiebt die Informationen über die Zuteilung der Zeitschlitze in einen Ringpuffer Future Grants Output Buffer (Buffer). Die Informationen über die den verschiedenen Datenflüssen zugeordneten Zeitschlitze werden in einen Schreibbereich 36 des Ringpuffers (Buffer) geschrieben. Genauer gesagt, werden die Informationen in ein Feld (sog. Slot) innerhalb des Schreibbereichs 36 des Ringpuffers (Buffer) geschrieben, auf das ein Schreibzeiger 37 zeigt. Die Position des Schreibzeigers 37 wird in Abhängigkeit von dem Zuteilungszeitpunkt des aktuell bearbeiteten Datenflusses ermittelt. Der Zuteilungszeitpunkt kann entweder absolut oder relativ in Form der Wartezeit (Differenz zwischen dem Zuteilungszeitpunkt und dem aktuellen Zeitpunkt) angegeben werden.

Der Schreibbereich wird durch eine variable erste obere Zeitschwellen (Maximum Granting Threshold) 23 und eine variable erste untere Zeitschwelle (Minimum Granting Threshold) 24 begrenzt. Die Positionen der Schwellen 23, 24 in dem Ringpuffer (Buffer) wird durch eine Einheit Delay Control (Delay Ctrl.) ermittelt. In der Einheit Delay Control (Delay Ctrl.) werden die Positionen der Schwellen bspw. in Abhängigkeit von der erforderlichen Kapazität des Ringpuffers (Buffer), in Abhängigkeit von der Geschwindigkeit, mit der die aus den Feldern des Ringpuffers (Buffer) ausgelesenen Informationen in die MAC-Schicht abtransportiert werden, oder in Abhängigkeit von Vorgaben und Grenzwerten 25 ermittelt.

Die Vorgaben und Grenzwerte 25 werden von einer Einheit Payload Control (Payload Ctrl.) an die Einheit Delay Control (Delay Ctrl.) übertragen. Die Einheit Payload Control (Payload Ctrl.) stellt eine Protokoll-Schnittstelle dar, die für eine Bedienung der Signalisierungsprotokolle (z. B. Verbindungsaufbau/ Verbindungsabbau) zuständig ist.

Der Weighted Round Robin (WRR) schreibt Informationen 26 über die Auslastung des Sytems in die Delay Control (Delay Ctrl.), damit die Schwellen 23, 24 entsprechend variiert werden können.

Die Warteschlange (Buffer) erhält Informationen 28 von einer Einheit Slot Boundary Pattern (Slot BP), das von einer Einheit MAC Control (MAC Ctrl.) Informationen erhält. Die Einheit Slot Boundary Pattern (Slot BP) stellt eine Schnittstelle zu einem Prozess dar, der die Frequenz, mit der die Zeitschlitze zugeteilt werden, definiert. Die zugeordneten Zeitschlitze 29 werden aus der Warteschlange (Buffer) zu den ermittelten Zeitpunkten über eine Einheit Grant Exit an den MAC Message Handler Downstream (MAC down) übermittelt. Die Informationen 29 werden aus einem bestimmten Speicherbereich der Warteschlange (Buffer) asynchron ausgelesen. Die Einheit Grant Exit steht mit einem Slot Counter (Slot Count) in Verbindung, der es Endgeräten 12, 13, 14 (z. B. Modems) ermöglicht, die absolute Zeit zu erkennen. Der Slot Counter (Slot Count) ist für eine Synchronisation zwischen der Schicht 1 und der Schicht 2 des ISO/OSI-Schichtenmodells zuständig. Von der Einheit Grant Exit werden außerdem Informationen 30 an einen M-Bit Pattern Generator (M-Bit) übermittelt. Zwischen dem M-Bit Pattern Generator (M-Bit) und dem MAC Message Handler Downstream (MAC down) findet eine Synchronisation 31 statt.

Die Vorteile der vorliegenden Erfindung liegen insbesondere darin, dass die Datenflüsse in einer Tabelle abgelegt sind, aus der sie schnell und ohne großen Verarbeitungsaufwand nach einer vorgebbaren Zuteilungsstrategie zur Zuteilung von Zeitschlitzen herausgegriffen werden können. Um den Speicherplatz der Tabelle zu reduzieren, sind in den Feldern der Tabelle lediglich Referenzen (Verweise) auf die Datenflüsse und die zugehörigen Informationen, die bspw. in dem Sevice Level Agreement (SLA) abgelegt sind, abgelegt.

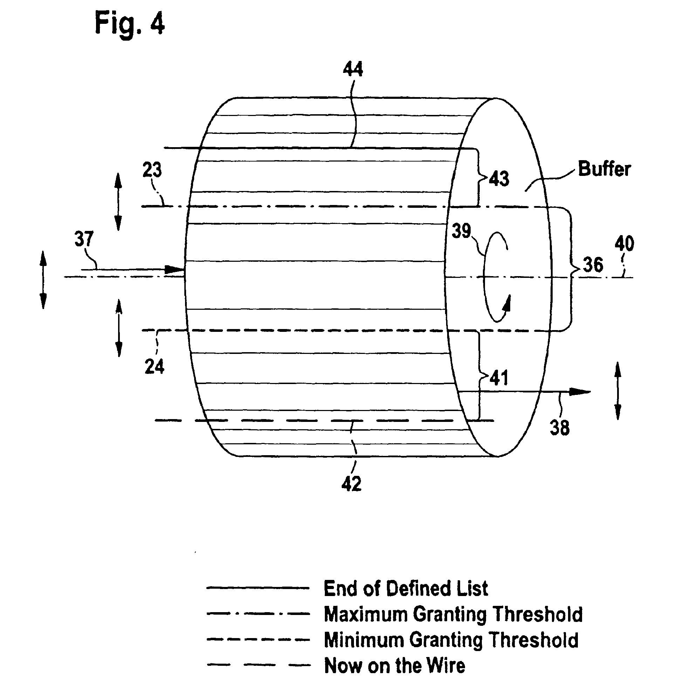

In Figur 4 ist der Ringpuffer (Buffer) des Steuergeräts 10 im Ausschnitt dargestellt. Der Ringpuffer (Buffer) stellt eine Verwaltungsstruktur dar, die eine vorausschauende Planung der Zuteilung der Zeitschlitze auf eine einfache und systemresourcensparende Weise ermöglicht. Der Ringpuffer (Buffer) dreht sich mit einer vorgebbaren Taktrate (z. B. 3 ms) in Richtung eines Pfeils 39 um eine Drehachse 40. Der Ringpuffer ist üblicherweise softwaremäßig realisiert. Er verfügt über den Schreibzeiger 37, der auf ein Feld des Ringpuffers (Buffer) innerhalb des Schreibbereichs 36 zeigt. Zeitlich gesehen vor dem Schreibbereich 36 ist ein zeitlicher Lesebereich 41 durch die variable erste untere Zeitschwelle 24 und eine zweite untere Zeitschwelle (Now on the Wire) 42 definiert. Es ist ein Lesezeiger 38 vorgesehen, der auf eines der Felder innerhalb des Lesebereichs 41 zeigt. Die den einzelnen Datenflüssen zugeordnete und in dem Ringpuffer (Buffer) abgelegten Zeitschlitze werden aus dem Feld des Ringpuffers (Buffer) entnommen, auf das der Lesezeiger 38 zeigt. Die Position des Lesezeigers 38 wird in Abhängigkeit von der Geschwindigkeit, mit der die ausgelesenen Zeitschlitze an die MAC-Schicht und weiter zu den Endgeräten 12, 13, 14 transportiert werden, ermittelt.

Der Ringpuffer (Buffer) dreht sich relativ zu der Schreib- und Leseposition des Schreibzeigers 37 bzw. des Lesezeigers 38, so dass nach einer vollständigen Umdrehung des Ringpuffers (Buffer) jedes Feld einmal an der Schreibposition und einmal an der Leseposition war. Der Schreibbereich 36 und der Lesebereich 41 ist also nicht bestimmten Feldern des Ringpuffers (Buffer), sondern bestimmten Zeitbereichen zugeordnet.

Zeitlich gesehen nach dem Schreibbereich 36 ist ein zeitlicher Definitionsbereich 43 durch die variable erste obere Zeitschwelle 23 und eine zweite obere Zeitschwelle (End of Defined List) 44 definiert, in dem die Felder in dem Schreibbereich 36 als bestimmte Typen definiert werden. Über geeignete Einträge in dem Definitionsbereich 43 können bspw. bestimmte Felder des Ringpuffers (Buffer) für Datenflüsse von QoS-Anwendungen reserviert werden. Der Definitionsbereich 43 wird bspw. bei DVB für die sog. Ranging-Slots, Contention-Slots, Reservation-Slots oder Fixed-Rate-Slots benutzt.

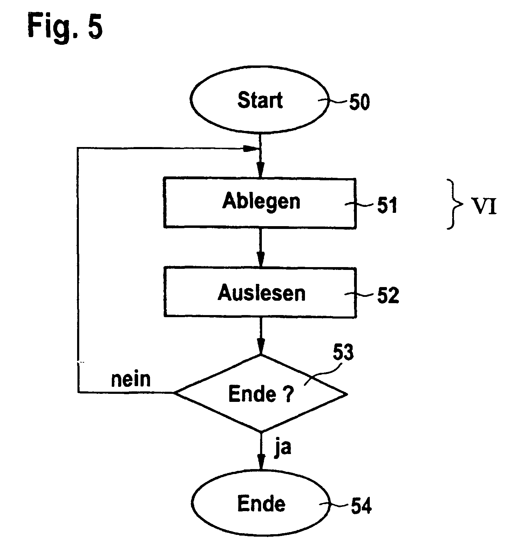

In Figur 5 ist ein Ablaufdiagramm eines erfindungsgemäßen Verfahrens dargestellt. Das erfindungsgemäße Verfahren ist für alle physikalischen Datennetzwerke 1 anwendbar, in denen die Vergabe von Zeitschlitzen für jede Datenübertragung zwischen den Endgeräten 12, 13, 14 und dem Steuergerät 10 ausgehandelt und die Zuteilung von Zeitschlitzen im Voraus geplant und koordiniert werden muss. Das Verfahren wird in dem Steuergerät 10 aus Figur 2 ausgeführt. Es beginnt in einem Funktionsblock 50. Nacheinander werden dann in Funktionsblöcken 51, 52 zwei Tasks durchlaufen. In dem Funktionsblock 51 werden die von dem Weighted Round Robin (WRR) zu dem Ringpuffer (Buffer) geschobenen Informationen über die einem Datenfluss zugeordneten Zeitschlitze in einem bestimmten Feld in dem Ringpuffer (Buffer) abgelegt. In dem Funktionsblock 52 werden dann die in den Feldern des Ringpuffers (Buffer) abgelegten Informationen idealerweise zu dem Zuteilungszeitpunkt des Datenflusses aus den Feldern entnommen, an die MAC-Schicht weitertransportiert und den Endgeräten 12, 13, 14 für eine Datenübertragung über den Datenfluss zugeteilt. Die beiden Tasks werden so lange zyklisch durchlaufen, bis in einem Abfrageblock 53 das Ende des Verfahrens festgestellt wird. In einem Funktionsblock 54 wird das Verfahren beendet. Alternativ können die Tasks aus einem übergeordneten Steuerprogramm heraus auch bspw. durch Interrupts zu bestimmten Zeitpunkten oder ereignisgesteuert aufgerufen werden (asynchrone Ausführung).

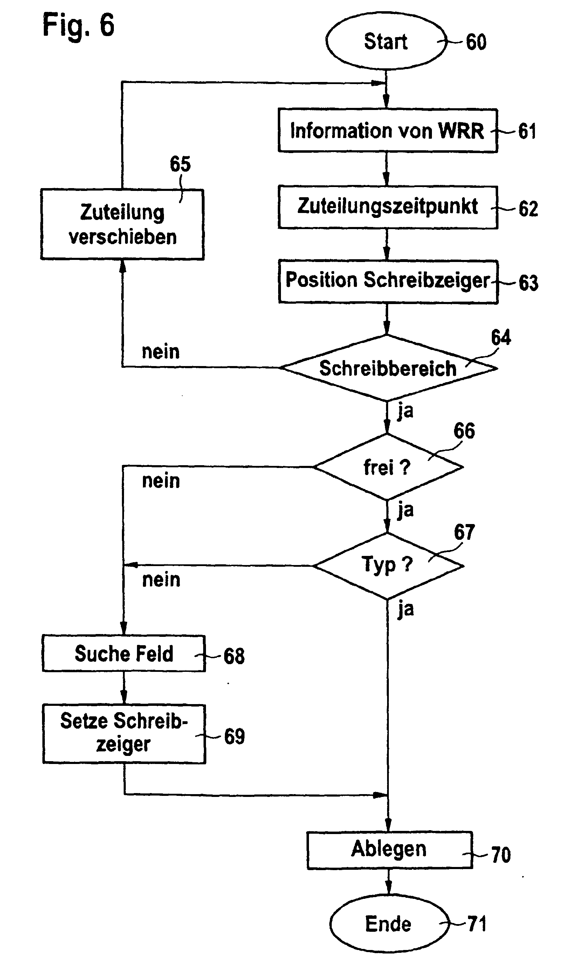

In Figur 6 ist ein Ablaufdiagramm der Task aus Funktionsblock 51 der Figur 5 im Detail dargestellt. Die Task beginnt in einem Funktionsblock 60. In einem Funktionsblock 61 werden die von dem Weighted Round Robin (WRR) erhaltenen Informationen entgegengenommen. Die Informationen umfassen bspw. Referenzen (Verweise) auf Objekte, die den Zuteilungszeitpunkt des Datenflusses, die Anzahl der dem Datenfluss zugeordneten Zeitschlitze u. a. enthalten. In einem Funktionsblock 62 wird der Zuteilungszeitpunkt des Datenflusses, über den in dem Funktionsblock 61 Informationen empfangen wurden, eingelesen. In Abhängigkeit von dem Zuteilungszeitpunkt wird in einem Funktionsblock 63 auf eine oben bereits ausführlich erläuterte Weise die Position des Schreibzeigers 37 ermittelt.

In einem Abfrageblock 64 wird überprüft, ob das Feld des Ringpuffers (Buffer), auf das der Schreibzeiger 37 zeigt, innerhalb des Schreibbereichs 36 liegt. Falls das Feld außerhalb des Schreibbereichs 36 liegt, bedeutet dies, dass die Zuteilung von Zeitschlitzen für diesen Datenfluss noch zu weit in der Ferne liegt. Deshalb wird in diesem Fall zu einem Funktionsblock 65 verzweigt, in dem die Zuteilung von Zeitschlitzen für diesen Datenfluss auf einen späteren Zeitpunkt verschoben wird. Von dem Funktionsblock 65 aus wird zu dem Funktionsblock 61 verzweigt, wo Informationen über einen weiteren Datenfluss von dem Weighted Round Robin (WRR) entgegengenommen und die weiteren Verfahrensschritte für diesen Datenfluss ausgeführt werden.

Falls das Feld des Ringpuffers (Buffer), auf das der Schreibzeiger 37 zeigt, innerhalb des Schreibbereichs 36 liegt, wird in einem Abfrageblock 66 überprüft, ob das Feld frei ist. Falls ja, wird in einem weiteren Abfrageblock 67 überprüft, ob das Feld, auf das der Schreibzeiger 37 zeigt, einem geforderten Typ entspricht. Falls der Datenfluss bspw. Teil einer Best-Effort-Anwendung ist, sollten die Informationen über die diesem Datenfluss zugeordneten Zeitschlitze nicht in einem Feld abgelgt werden, das für QoS-Anwendung reserviert ist.

Falls das Feld, auf das der Schreibzeiger 37 zeigt, bereits belegt ist und/oder falls das Feld nicht vom geforderten Typ ist, wird zu einem Funktionsblock 68 verzweigt, in dem ein Feld ermittelt wird, das dem in dem Funktionsblock 63 ermittelten Feld am nächsten liegt und das sowohl frei als auch vom geforderten Typ ist. In einem Funktionsblock 69 wird der Schreibzeiger 37 dann auf dieses neu ermittelte Feld gesetzt. In einem Funktionsblock 70 werden die von dem Weighted Round Robin (WRR) erhaltenen Informationen über die dem Datenfluss zugeordneten Zeitschlitze in dem Feld abgelegt, auf das der Schreibzeiger 37 zeigt.

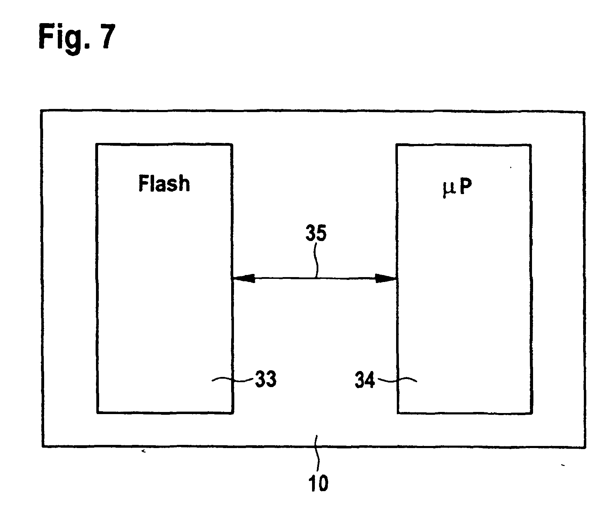

In Figur 7 ist das Steuergerät 10 dargestellt. Das Steuergerät 10 umfasst ein Speicherelement 33, auf dem ein Computerprogramm abgespeichert ist. Das Speicherelement 33 ist als ein elektronisches Speichermedium, bspw. als ein Flash-Memory, ausgebildet. Das Computerprogramm ist auf einem Rechengerät 34 des Steuergeräts 10 ablauffähig. Zur Ausführung des Computerprogramms auf dem Rechengerät 34 wird das Computerprogramm entweder in seiner Gesamtheit oder befehlsweise aus dem Speicherelement 33 über eine Datenübertragungsverbindung 35 an das Rechengerät 34 übertragen. Das Computerprogramm ist zur Ausführung des erfindungsgemäßen Verfahrens geeignet, wenn es auf dem Rechengerät 34 abläuft.

## Patentansprüche

1. Verfahren zur Zuteilung von Zeitschlitzen für eine Übertragung von Daten in variablen Zeitschlitzen zwischen einem Steuergerät (10) eines paketorientierten Datennetzwerks (1) einerseits und einem Endgerät (12, 13, 14) eines Teilnehmers des Datennetzwerks (1) andererseits, wobei die Zeitschlitze zur Datenübertragung einem Endgerät (12, 13, 14) für einen Datenfluss nach Anforderung durch das Endgerät (12, 13, 14) und in Abhängigkeit von der in dem Datennetzwerk (1) zur Verfügung stehenden Übertragungskapazität zugeordnet und in einem Ringpuffer zwischengespeichert werden, bevor sie dem Endgerät zu einem vorgebbaren Zuteilungszeitpunkt zugeteilt werden, **dadurch gekennzeichnet, dass** in dem Ringpuffer ein zeitlicher Schreibbereich (36) durch eine variable erste obere Zeitschwelle (23) und eine zeitlich frühere variable erste untere Zeitschwelle (24) definiert wird, dass in Abhängigkeit von dem Zuteilungszeitpunkt eine Position eines Schreibzeigers (37) auf ein Feld des Ringpuffers innerhalb des Schreibbereichs (36) derart ermittelt wird, dass er auf ein Feld des Ringpuffers zeigt, das sich bei einer vorgegebenen Taktrate des Ringpuffers zum Zuteilungszeitpunkt des Datenflusses an einer Position befindet, an der der Inhalt des Feldes ausgelesen wird, und dass die dem Endgerät (12, 13, 14) für den Datenfluss zugeordneten Zeitschlitze in einem der Position des Schreibzeigers (37) entsprechenden Feld abgelegt werden.

2. Verfahren nach Anspruch 1, **dadurch gekennzeichnet, dass** in dem Ringpuffer zeitlich vor dem Schreibbereich (36) ein zeitlicher Lesebereich (41) durch die variable erste untere Zeitschwelle (24) und eine zeitlich frühere zweite untere Zeitschwelle (42) definiert wird, ein Lesezeiger (38) in Abhängigkeit von der Geschwindigkeit, mit der die ausgelesenen Zeitschlitze zu den Endgeräten (12, 13, 14) transportiert werden, auf ein Feld des Ringpuffers innerhalb des Lesebereichs (41) zeigt und die dem Endgerät (12, 13, 14) für den Datenfluss zugeordneten Zeitschlitze aus dem Feld, auf das der Lesezeiger (38) zeigt, entnommen werden.

3. Verfahren nach Anspruch 1 oder 2, **dadurch gekennzeichnet, dass** zum Ablegen der zugeordneten Zeitschlitze in dem Ringpuffer das Feld innerhalb des Schreibbereichs (36) ermittelt wird, auf das der Schreibzeiger (37) zeigt, und der Schreibzeiger (37) auf das nächstliegende freie Feld innerhalb des Schreibbereichs (36) versetzt wird, falls das ermittelte Feld bereits belegt ist.

4. Verfahren nach einem der Ansprüche 1 bis 3, **dadurch gekennzeichnet, dass** in dem Ringpuffer zeitlich nach dem Schreibbereich (36) ein zeitlicher Definitionsbereich (43) durch die variable erste obere Zeitschwelle (23) und eine zeitlich spätere zweite obere Zeitschwelle (44) definiert wird, wobei in dem zeitlichen Definitionsbereich (43) Felder in dem Schreibbereich (36) als bestimmte Typen definiert werden.

5. Verfahren nach Anspruch 4, **dadurch gekennzeichnet, dass** zum Ablegen der zugeordneten Zeitschlitze in dem Ringpuffer das Feld innerhalb des Schreibbereichs (36) ermittelt wird, auf das der Schreibzeiger (37) zeigt, und der Schreibzeiger (37) auf das nächstliegende Feld eines vorgegebenen Typs innerhalb des Schreibbereichs (36) versetzt wird, falls das ermittelte Feld nicht von dem vorgegebenen Typ ist.

6. Steuergerät (10) für ein paketorientiertes Datennetzwerk (1) zur Übertragung von Daten in variablen Zeitschlitzen zwischen dem Steuergerät (10) einerseits und einem Endgerät (12, 13, 14) eines Teilnehmers des Datennetzwerks (1) andererseits, mit Mitteln zum Empfang und zur Verarbeitung einer Anforderung (20) eines Endgeräts (12, 13, 14) nach Zeitschlitzen und mit Mitteln zum Zuteilen von Zeitschlitzen auf die Anforderung (20) des Endgeräts (12, 13, 14) hin, wobei die Mittel zum Zuteilen die Zeitschlitze einem Endgerät (12, 13, 14) in Abhängigkeit von der in dem Datennetzwerk (1) zur Verfügung stehenden Übertragungskapazität zuordnen und in einem Ringpuffer zwischenspeichern, bevor die Mittel zum Zuteilen dem Endgerät (12, 13, 14) die Zeitschlitze zu einem vorgebbaren Zuteilungszeitpunkt zuteilen, **dadurch gekennzeichnet, dass** die Mittel zum Zuteilen umfassen:
- Mittel zum Definieren eines zeitlichen Schreibbereichs (36) in dem Ringpuffer durch eine variable erste obere Zeitschwelle (23) und eine zeitlich frühere variable erste untere Zeitschwelle (24);
- Mittel zum Bestimmen einer Position eines Schreibzeigers (37) auf ein Feld des Ringpuffers innerhalb des Schreibbereichs (36) in Abhängigkeit von dem Zuteilungszeitpunkt, wobei die Mittel die Position des Schreibzeigers (37) derart ermitteln, dass er auf ein Feld des Ringpuffers zeigt, das sich bei einer vorgegebenen Taktrate des Ringpuffers zum Zuteilungszeitpunkt des Datenflusses an einer Position befindet, an der der Inhalt des Feldes ausgelesen wird; und
- Mittel zum Ablegen der dem Endgerät (12, 13, 14) für den Datenfluss zugeordneten Zeitschlitze in einem der Position des Schreibzeigers (37) entsprechenden Feld.

7. Steuergerät (10) nach Anspruch 6, **dadurch gekennzeichnet, dass** das Steuergerät (10) Mittel zur Ausführung eines Verfahrens nach einem der Ansprüche 2 bis 5 aufweist.

8. Computerprogramm, das auf einem Rechengerät (34), insbesondere auf einem Mikroprozessor, eines Steuergeräts (10) für ein paketorientiertes Datennetzwerk (1) zur Übertragung von Daten in variablen Zeitschlitzen ablauffähig ist, **dadurch gekennzeichnet, dass** das Computerprogramm zur Ausführung der nachfolgenden Schritte eines Verfahrens zur Zuteilung von Zeitschlitzen für eine Übertragung von Daten in variablen Zeitschlitzen zwischen einem Steuergerät (10) eines paketorientierten Datennetzwerks (1) einerseits und einem Endgerät (12, 13, 14) eines Teilnehmers des Datennetzwerks (1) andererseits programmiert ist, wobei die Zeitschlitze zur Datenübertragung einem Endgerät (12, 13, 14) für einen Datenfluss nach Anforderung durch das Endgerät (12, 13, 14) und in Abhängigkeit von der in dem Datennetzwerk (1) zur Verfügung stehenden Übertragungskapazität zugeordnet und in einem Ringpuffer zwischengespeichert werden, bevor sie dem Endgerät zu einem vorgebbaren Zuteilungszeitpunkt zugeteilt werden:
- Definition eines zeitlichen Schreibbereichs (36) in dem Ringpuffer durch eine variable erste obere Zeitschwelle (23) und eine zeitlich frühere variable erste untere Zeitschwelle (24),
- in Abhängigkeit von dem Zuteilungszeitpunkt Ermitteln einer Position eines Schreibzeigers (37) auf ein Feld des Ringpuffers innerhalb des Schreibbereichs (36), wobei die Position des Schreibzeigers (37) derart ermittelt wird, dass er auf ein Feld des Ringpuffers zeigt, das sich bei einer vorgegebenen Taktrate des Ringpuffers zum Zuteilungszeitpunkt des Datenflusses an einer Position befindet, an der der Inhalt des Feldes ausgelesen wird, und
- Ablegen der dem Endgerät (12, 13, 14) für den Datenfluss zugeordneten Zeitschlitze in einem der Position des Schreibzeigers (37) entsprechenden Feld.

9. Computerprogramm nach Anspruch 8, **dadurch gekennzeichnet, dass** das Computerprogramm zur Ausführung aller Schnitte des Verfahrens nach einem der Ansprüche 2 bis 5 programmiert ist, wenn es auf dem Rechengerät (34) abläuft.

10. Computerprogramm nach Anspruch 8 oder 9, **dadurch gekennzeichnet, dass** das Computerprogramm auf einem Speicherelement (33), insbesondere auf einem Random-Access-Memory, einem Read-Only-Memory oder einem Flash-Memory, abgespeichert ist.

## Revendications

1. Procédé d'allocation des créneaux temporels pour une transmission de données dans des créneaux temporels variables entre un appareil de commande (10) d'un réseau de données (1) en mode paquets d'un côté et un terminal (12, 13, 14) d'un abonné du réseau de données (1) de l'autre côté, les créneaux temporels pour la transmission des données étant affectés à un terminal (12, 13, 14) pour un flux de données après une demande par le terminal (12, 13, 14) et en fonction de la capacité de transmission disponible dans le réseau de données (1) et étant mémorisés temporairement dans un tampon en anneau avant qu'ils soient alloués au terminal à un moment d'allocation pouvant être prédéfini, **caractérisé en ce que** dans le tampon en anneau, une plage d'écriture temporelle (36) est définie par un premier seuil de temps supérieur variable (23) et un premier seuil de temps inférieur variable (24) antérieur dans le temps, qu'une position d'un pointeur d'écriture (37) soit déterminée sur un champ du tampon en anneau à l'intérieur de la plage d'écriture (36) en fonction du moment d'allocation de telle sorte qu'il pointe sur un champ du tampon en anneau qui, au moment d'allocation du flux de données avec une fréquence d'horloge donnée du tampon en anneau, se trouve à une position dans laquelle le contenu du champ est lu, et que les créneaux temporels affectés au terminal (12, 13, 14) pour le flux de données sont stockés dans un champ correspondant à la position du pointeur d'écriture (37).

2. Procédé selon la revendication 1, **caractérisé en ce qu'**une plage de lecture temporelle (41), antérieure dans le temps à la plage d'écriture (36) dans le tampon en anneau, est définie par le premier seuil de temps inférieur variable (24) et un deuxième seuil de temps inférieur (42) antérieur dans le temps, un pointeur de lecture (38) pointe sur un champ du tampon en anneau à l'intérieur de la plage de lecture (41) en fonction de la vitesse à laquelle les créneaux temporels lus sont transportés vers les terminaux (12, 13, 14) et les créneaux temporels affectés au terminal (12, 13, 14) pour le flux de données sont prélevés du champ vers lequel pointe le pointeur le lecture (38).

3. Procédé selon la revendication 1 ou 2, **caractérisé en ce que** pour stocker les créneaux temporels affectés dans le tampon en anneau, on détermine à l'intérieur de la plage d'écriture (36) le champ vers lequel point le pointeur d'écriture (37) et le pointeur d'écriture (37) est décalé sur le prochain champ libre à l'intérieur de la plage d'écriture (36) si le champ déterminé est déjà occupé.

4. Procédé selon l'une des revendications 1 à 3, **caractérisé en ce qu'**une plage de définition temporelle (42) postérieure dans le temps à la plage d'écriture (36) est définie dans le tampon en anneau par le premier seuil de temps supérieur variable (23) et un deuxième seuil de temps supérieur (44) postérieur dans le temps, les champs dans la plage d'écriture (36) sont définis dans la plage de définition temporelle (43) comme des types donnés.

5. Procédé selon la revendication 4, **caractérisé en ce que** pour stocker les créneaux temporels affectés dans le tampon en anneau, on détermine le champ à l'intérieur de la plage d'écriture (36) vers lequel pointe le pointeur d'écriture (37) et le pointeur d'écriture (37) est décalé sur le champ le plus proche d'un type prédéfini à l'intérieur de la plage d'écriture (36) si le champ déterminé n'est pas du type prédéfini.

6. Appareil de commande (10) pour un réseau de données en mode paquets (1) destiné à transmettre des données dans des créneaux temporels variables entre l'appareil de commande (10) d'un côté et un terminal (12, 13, 14) d'un abonné du réseau de données (1) de l'autre côté, comprenant des moyens pour recevoir et pour traiter une demande (20) d'un terminal (12, 13, 14) pour des créneaux temporels et comprenant des moyens pour allouer des créneaux temporels suite à la demande (20) du terminal (12, 13, 14), les moyens d'allocation affectant les créneaux temporels d'un terminal (12, 13, 14) en fonction de la capacité de transmission disponible dans le réseau de données (1) et les mémorisant temporairement dans un tampon en anneau avant que les moyens d'allocation allouent les créneaux temporels au terminal (12, 13, 14) à un moment d'allocation pouvant être prédéfini, **caractérisé en ce que** les moyens d'allocation comprennent :
- des moyens pour définir une plage d'écriture temporelle (36) dans le tampon en anneau par un premier seuil de temps supérieur variable (23) et un premier seuil de temps inférieur variable antérieur dans le temps (24) ;
- des moyens pour déterminer une position d'un pointeur d'écriture (37) sur un champ du tampon en anneau à l'intérieur de la plage d'écriture (36) en fonction du moment d'allocation, les moyens déterminant la position du pointeur d'écriture (37) de telle sorte qu'il pointe sur un champ du tampon en anneau qui, au moment d'allocation du flux de données avec une fréquence d'horloge donnée du tampon en anneau, se trouve à une position dans laquelle le contenu du champ est lu ; et
- des moyens pour stocker les créneaux temporels affectés au terminal (12, 13, 14) pour le flux de données dans un champ correspondant à la position du pointeur d'écriture (37).

7. Appareil de commande (10) selon la revendication 6, **caractérisé en ce que** l'appareil de commande présente des moyens pour mettre en oeuvre un procédé selon l'une des revendications 2 à 5.

8. Programme informatique qui peut être exécuté sur un calculateur (34), notamment sur un microprocesseur, d'un appareil de commande (10) pour un réseau de données en mode paquets (1) destiné à transmettre des données dans des créneaux temporels variables, **caractérisé en ce que** le programme informatique destiné à exécuter les étapes suivantes d'un procédé d'allocation de créneaux temporels pour une transmission de données dans des créneaux temporels variables entre un appareil de commande (10) d'un réseau de données en mode paquets (1) d'un côté et un terminal (12, 13, 14) d'un abonné du réseau de données (1) de l'autre côté, les créneaux temporels pour la transmission des données étant affectés à un terminal (12, 13, 14) pour un flux de données après une demande par le terminal (12, 13, 14) et en fonction de la capacité de transmission disponible dans le réseau de données (1) et étant mémorisés temporairement dans un tampon en anneau avant qu'ils soient alloués au terminal à un moment d'allocation pouvant être prédéfini :
- définition d'une plage d'écriture temporelle (36) dans le tampon en anneau par un premier seuil de temps supérieur variable (23) et un premier seuil de temps inférieur variable (24) antérieur dans le temps,
- en fonction du moment d'allocation, détermination d'une position d'un pointeur d'écriture (37) sur un champ du tampon en anneau à l'intérieur de la plage d'écriture (36), la position du pointeur d'écriture (37) étant déterminée de telle sorte qu'il pointe sur un champ du tampon en anneau qui, au moment d'allocation du flux de données avec une fréquence d'horloge donnée du tampon en anneau, se trouve à une position dans laquelle le contenu du champ est lu ; et
- stockage des créneaux temporels affectés au terminal (12, 13, 14) pour le flux de données dans un champ correspondant à la position du pointeur d'écriture (37).

9. Programme informatique selon la revendication 8, **caractérisé en ce que** le programme informatique est programmé pour exécuter toutes les étapes du procédé selon l'une des revendications 2 à 5 lorsqu'il est exécuté sur le calculateur (34).

10. Programme informatique selon la revendication 8 ou 9, **caractérisé en ce que** le programme informatique est enregistré sur un élément mémoire (33), notamment sur une mémoire vive, une mémoire morte ou une mémoire flash.

## Claims

1. Procedure for the allocation of time slots for a transmission of data in variable time slots between a controller (10) of a packet-oriented data network (1) on the one hand and a terminal (12, 13, 14) of a user of the data network (1) on the other hand, the time slots for the data transmission being assigned to a terminal (12, 13, 14) for a data flow following request made by the terminal (12, 13, 14) and in dependence on the transmission capacity available in the data network (1), and being temporarily stored in a ring buffer before they are allocated to the terminal at a predefinable allocation instant, **characterized in that** in the ring buffer a temporal write area (36) is defined by a variable first upper time threshold (23) and a temporally preceding variable first lower time threshold (24), a position of a write pointer (37) to a field of the ring buffer within the write area (36) is determined in dependence on the allocation instant in such a way that said write pointer points to a field of the ring buffer which, in the case of a predefined clock rate of the ring buffer, at the allocation instant of the data flow is located at a position at which the content of the field is read out, and the time slots assigned to the terminal (12, 13,14) for the data flow are stored in a field corresponding to the position of the write pointer (37).

2. Procedure according to Claim 1, **characterized in that**, in the ring buffer, temporally preceding the write area (36), a temporal read area (41) is defined by the variable first lower time threshold (24) and a temporally preceding second lower time threshold (42), a read pointer (38) points to a field of the ring buffer within the read area (41) in dependence on the speed at which the read-out time slots are transferred to the terminals (12, 13, 14), and the time slots assigned to the terminal (12, 13, 14) for the data flow are extracted from the field to which the read pointer (38) points.

3. Procedure according to either of Claims 1 or 2, **characterized in that**, for the purpose of storing the assigned time slots in the ring buffer, the field, within the write area (36), to which the write pointer (37) points is determined and the write pointer (37) is displaced to the nearest free field within the write area (36) if the determined field is already occupied.

4. Procedure according to any one of Claims 1 to 3, **characterized in that**, in the ring buffer, temporally succeeding the write area (36), a temporal definition area (43) is defined by the variable first upper time threshold (23) and a temporally succeeding second upper time threshold (44), fields in the write area (36) being defined as particular types in the temporal definition area (43).

5. Procedure according to Claim 4, **characterized in that**, for the purpose of storing the assigned time slots in the ring buffer, the field, within the write area (36), to which the write pointer (37) points is determined and the write pointer (37) is displaced to the nearest field of a predefined type within the write area (36) if the determined field is not of the predefined type.

6. Controller (10) for a packet-oriented data network (1) for the transmission of data in variable time slots between the controller (10) on the one hand and a terminal (12, 13, 14) of a user of the data network (1) on the other hand, with means for receiving and processing a request (20) made by a terminal (12, 13, 14) for time slots, and with means for allocating time slots upon the request (20) made by the terminal (12, 13, 14), the means for allocation assigning the time slots to a terminal (12, 13, 14) in dependence on the transmission capacity available in the data network (1) and temporarily storing them in a ring buffer before the means for allocation allocate the time slots to the terminal (12, 13, 14) at a predefinable allocation instant, **characterized in that** the means for allocation comprise:
- means for the definition of a temporal write area (36) in the ring buffer by a variable first upper time threshold (23) and a temporally preceding variable first lower time threshold (24);
- means for determining a position of a write pointer (37) to a field of the ring buffer within the write area (36) in dependence on the allocation instant, the means determining the position of the write pointer (37) in such a way that said write pointer points to a field of the ring buffer which, in the case of a predefined clock rate of the ring buffer, at the allocation instant of the data flow is located at a position at which the content of the field is read out; and
- means for storing the time slots assigned to the terminal (12, 13, 14) for the data flow in a field corresponding to the position of the write pointer (37).

7. Controller (10) according to Claim 6, **characterized in that** the controller (10) has means for executing a procedure according to any one of Claims 2 to 5.

8. Computer program which can be executed on a computing device (34), particularly on a microprocessor, of a controller (10) for a packet-oriented data network (1) for the transmission of data in variable time slots, **characterized in that** the computer program is programmed to execute the following steps of a procedure for the allocation of time slots for a transmission of data in variable time slots between a controller (10) of a packet-oriented data network (1) on the one hand and a terminal (12, 13, 14) of a user of the data network (1) on the other hand, the time slots for the data transmission being assigned to a terminal (12, 13, 14) for a data flow following request made by the terminal (12, 13, 14) and in dependence on the transmission capacity available in the data network (1), and being temporarily stored in a ring buffer before they are allocated to the terminal at a predefinable allocation instant:
- definition of a temporal write area (36) in the ring buffer by a variable first upper time threshold (23) and a temporally preceding variable first lower time threshold (24),
- in dependence on the allocation instant, determination of a position of a write pointer (37) to a field of the ring buffer within the write area (36), the position of the write pointer (37) being determined in such a way that said write pointer points to a field of the ring buffer which, in the case of a predefined clock rate of the ring buffer, at the allocation instant of the data flow is located at a position at which the content of the field is read out, and
- storage of the time slots assigned to the terminal (12, 13, 14) for the data flow in a field corresponding to the position of the write pointer (37).

9. Computer program according to Claim 8, **characterized in that**, when executed on the computing device (34), the computer program is programmed to execute all steps of the procedure according to any one of Claims 2 to 5.

10. Computer program according to either of Claims 8 or 9, **characterized in that** the computer program is stored on a storage element (33), particularly on a random-access memory, a read-only memory or a flash memory.
